# NEUE EUROPÄISCHE PATENTSCHRIFT

(11) **EP 2 995 826 B2**
(45) Veröffentlichungstag und Bekanntmachung des Hinweises auf die Entscheidung über den Einspruch: **16.12.2020**
(45) Hinweis auf die Patenterteilung: 09.08.2017
(21) Anmeldenummer: 15173818.4
(22) Anmeldetag: 25.06.2015
(51) Int. Cl.: F16C 19/50, F16C 33/46

(54) **SCHWENKLAGER**
PIVOT BEARING
PIVOT

(30) Priorität: 26.08.2014 DE 102014112249
(43) Veröffentlichungstag der Anmeldung: 16.03.2016
(73) Patentinhaber: BPW Bergische Achsen KG, 51674 Wiehl (DE)
(72) Erfinder: Klaas, Thomas, 51580 Reichshof (DE)
(74) Vertreter: Christophersen Patentanwälte

(56) Entgegenhaltungen:
- EP-A1- 2 159 436
- EP-A2- 2 354 577
- EP-A2- 2 647 865
- DE-A1-102010 022 964
- JP-A- 2003 206 933
- US-A1- 2013 308 888

## Beschreibung

Die Erfindung betrifft ein Schwenklager mit einer Lagerschale, an der eine teilzylindrisch gekrümmte Wälzbahn ausgebildet ist, und mit an der Wälzbahn abrollenden, in einem Lagerkäfig zusammengefassten Wälzkörpern, wobei der Lagerkäfig und die Lagerschale in radialer Richtung gegeneinander verriegelt sind, und an dem Lagerkäfig und an der Lagerschale Anschläge angeordnet sind, welche die gegenseitige Beweglichkeit von Lagerkäfig und Lagerschale zumindest in die eine Umfangsrichtung begrenzen.

Ein Schwenklager, welches aus der EP 2 159 436 A1 oder der US 2013/0308888 A1 bekannt ist, besteht aus einer gekrümmten Lagerschale, an der innen eine Wälzbahn ausgebildet ist. An der Wälzbahn rollen Wälzkörper ab, die in einem Lagerkäfig zusammengefasst sind. Der Lagerkäfig und die Lagerschale sind in radialer Richtung gegeneinander verriegelt.

Beim Transport solcher Schwenklager, aber auch bei deren Handhabung während der Montage am bestimmungsgemäßen Einsatzort, z. B. in der Zuspannung einer Fahrzeug-Scheibenbremse, besteht die Gefahr eines ungewollten Auseinanderfallens der inneren und der äußeren Lagerbestandteile. Erfolgt aber der Einbau des Wälzlagers nicht in korrekter Lage und Ausrichtung der Lagerbestandteile, kann es später zu einer Fehlfunktion oder einem Ausfall der Bremse mit entsprechend weitreichenden Folgen kommen. Es ist daher, sofern keine besonderen Maßnahmen für den Fall getroffen werden, dass sich die Bauteile ungewollt voneinander lösen, eine sehr große Sorgfalt beim Transport des Schwenklagers erforderlich, ebenso bei dessen Handhabung während der Vorbereitung und der Durchführung der Montage am Einsatzort.

Der Erfindung liegt die Aufgabe zugrunde, durch weitere, über den Stand der Technik hinausgehende Maßnahmen die Gefahr eines ungewollten Auseinanderfallens der inneren und der äußeren Lagerbestandteile zu verringern, und damit das Schwenklager bei der Montage einfacher handhaben zu können.

Zur Lösung dieser Aufgabe wird ein Schwenklager mit den Merkmalen des Patentanspruchs 1 vorgeschlagen.

Indem zumindest in die eine Umfangsrichtung der Bewegungsfreiraum des Lagerkäfigs durch an dem Lagerkäfig und an der Lagerschale angeordnete Anschläge begrenzt wird, besteht keine Gefahr eines ungewollten Auseinanderfallens der inneren und der äußeren Lagerbestandteile. An dem Lagerkäfig ist ein Vorsprung ausgebildet, der sich radial bis über die Wälzbahn hinaus erstreckt und an dem sich einer der Anschläge befindet, welche die gegenseitige Beweglichkeit von Lagerkäfig und Lagerschale begrenzen. Das Schwenklager lässt sich daher im Rahmen seiner Montage an dem bestimmungsgemäßen Einsatzort, z. B. in der Zuspannung einer Fahrzeug-Scheibenbremse, einfacher handhaben.

Der Lagerkäfig setzt sich aus einem die Walzkörper aufnehmenden Mittelbereich und Längsrändern zu beiden Seiten des Mittelbereichs zusammen, wobei sich die radiale Verriegelung an den Längsrändern befindet.

Für die Kompaktheit des Schwenklagers ist es von Vorteil, wenn der Lagerkäfig entlang seiner beiden Längsränder einen flacheren Querschnitt aufweist, als in seinem Mittelbereich. Diese Bauweise des Lagerkäfigs ermöglicht radial kurze Seitenwände an der Lagerschale. Diese Seitenwände können insbesondere so kurz sein dass sie radial weniger weit reichen, als die zylindrischen Mantelflächen der Wälzkörper. Auf diese Weise reichen die Seitenwände bei fertig montierter Lagerung nicht bis an jene Krümmungsebene heran, in der sich die andere, also die hebelseitige Wälzbahn befindet. Dies führt zu dem Vorteil, dass die maximale Breite der hebelseitigen Wälzbahn und deren axiale Lage relativ zu dem Lagerkäfig keinen oder nur geringen Beschränkungen unterliegt, wodurch sich die Kosten für die Herstellung des Hebels reduzieren lassen.

Für den Einsatz des Schwenklagers in einer mit einem verschwenkbaren Hebel als Zuspannelement arbeitenden Scheibenbremse ist es von Vorteil, wenn die Lagerschale eine konvex gekrümmte Außenseite und eine konkav gekrümmte Innenseite aufweist, und die Wälzbahn, an der sich die an dem Lagerkäfig zusammengefassten Wälzkörper abwälzen, an der Innenseite der Lagerschale ausgebildet ist.

Vorzugsweise setzt sich der Lagerkäfig in Umfangsrichtung aus einem Hauptabschnitt, auf dem die Wälzkörper angeordnet sind, und den Abschluss des Lagerkäfigs bildenden Endabschnitten zusammen. Der Vorsprung ist in diesem Fall an einem der beiden Endabschnitte angeformt.

Ferner kann sich an dem Vorsprung ein weiterer Anschlag befinden, wobei der weitere Anschlag dann die Beweglichkeit des Lagerkäfigs in die andere Umfangsrichtung begrenzt.

Erfindungsgemäß ist die Lagerschale in der Wälzbahn mit einem Langloch oder mit einer langlochförmigen Ausnehmung versehen, in welches bzw. in welche sich der Vorsprung erstreckt. Der an der Lagerschale angeordnete Anschlag wird durch das eine Ende des Langlochs bzw. der langlochförmigen Ausnehmung gebildet.

Ein anderer an der Lagerschale angeordneter Anschlag kann sich an dem anderen Ende des Langlochs bzw. der langlochförmigen Ausnehmung befinden.

Gemäß einer Ausgestaltung ist die Breite des Vorsprungs geringer als die Breite des Lagerkäfigs, vorzugsweise maximal ein Drittel der Breite des Lagerkäfigs.

Gemäß einer Ausgestaltung ändert sich über die Länge des Langlochs bzw. der langlochartigen Ausnehmung dessen bzw. deren Breite, wobei die geringste Breite gleich oder etwas geringer als die Breite des Vorsprungs ist. Dadurch kann ein leichtes Klemmen des Vorsprungs erreicht werden, was in bestimmten Montagesituationen von Vorteil sein kann.

Mit einer weiteren Ausgestaltung werden mit Reibschluss arbeitende Mittel zur Vorpositionierung des Lagerkäfigs relativ zu der Lagerschale vorgeschlagen.

Weitere Erläuterungen erfolgen im Folgenden anhand der Zeichnungen. Darin zeigen
- Fig. 1: in einer Explosionsdarstellung eine der Bremskraftübertragung und -verstärkung in einer druckluftbetriebenen Scheibenbremse dienende Anordnung aus einem schwenkbaren Hebel, zwei Wälzlagern, von denen hier nur eines dargestellt ist, und einem Druckstück;
- Fign. 2 a-c: einen Schnitt durch die betriebsfertig montierte Anordnung, wobei von links nach rechts die Zustände bei jeweils fortschreitender Zuspannung wiedergegeben sind;
- Fig. 3: den Schnitt nach Fig. 2b in vergrößertem Maßstab;
- Fig. 4: in perspektivischer Ansicht eine nicht erfindungsgemäße Ausführungsform des Schwenklagers der Lagerung, wobei die Lagerbestandteile des Schwenklagers eine Baugruppe bilden;
- Fig. 5: in perspektivischer Ansicht das Schwenklager der Lagerung in einer zweiten, erfindungsgemäßen Ausführungsform, wobei wiederum die Lagerbestandteile des Schwenklagers eine Baugruppe bilden;
- Fig. 6a-c: weitere perspektivische Ansichten des Schwenklagers gemäß der zweiten, erfindungsgemäßen Ausführungsform, wobei die Zustände bei jeweils fortschreitender Zuspannung wiedergegeben sind;
- Fig. 7: den schwenkbaren Hebel in einer Ausführungsform, bei der zusätzlich Lagerschalen an den Hebel angesetzt sind, und
- Fig. 8: in Einzeldarstellung eine der an den Hebel nach Fig. 7 angesetzten Lagerschalen.

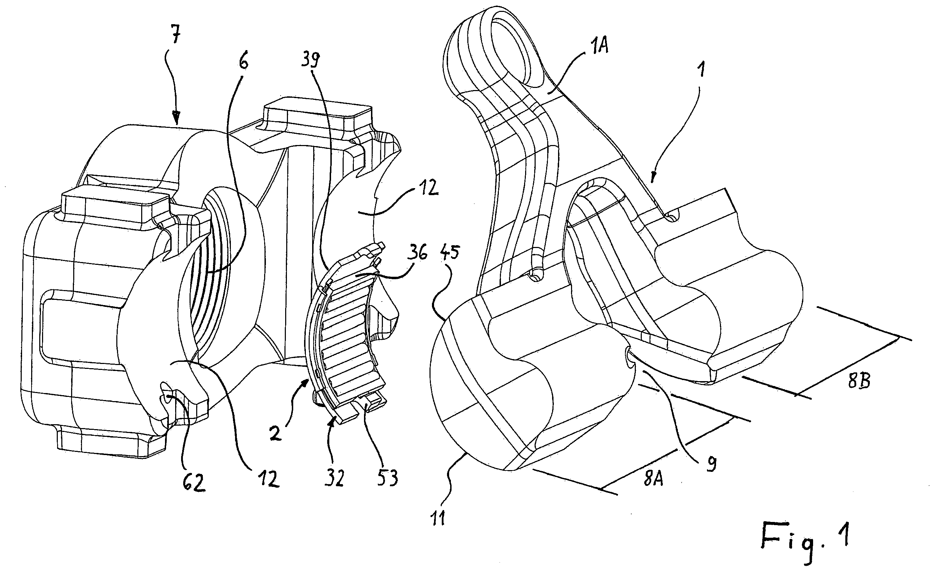

Die Figur 1 zeigt, als Bestandteil einer druckluftbetriebenen Nutzfahrzeug-Scheibenbremse, eine der Bremskraftübertragung und -verstärkung dienende Anordnung aus einem schwenkbaren Hebel 1, zwei Wälzlagern, von denen in Fig. 1 nur ein Wälzlager 2 dargestellt ist, und einem Druckstück 7. In einem Bremssattel der Scheibenbremse ist ein Druckstempel geführt. Bei Betätigung der Bremse legt sich der Druckstempel nach Überwindung eines Lüftspiels gegen die Rückseite eines inneren Bremsbelags und drückt diesen gegen die rotierende Bremsscheibe der Scheibenbremse. Zugleich wird rückwärtig über den Bremssattel die Reaktionskraft auf den anderen, von außen gegen die Bremsscheibe arbeitenden Bremsbelag übertragen.

Zum Ausgleich des sich im Laufe der Zeit einstellenden Bremsverschleißes ist die Scheibenbremse mit einer Nachstelleinrichtung versehen. Diese befindet sich in einem mit einem Außengewinde versehenen Nachstellelement. Das Außengewinde des Nachstellelements greift in ein Innengewinde 6. Das Innengewinde 6 befindet sich in einem nach Art einer Quertraverse gestalteten Druckstück 7, welches in dem Bremssattel in Zuspannrichtung geführt ist.

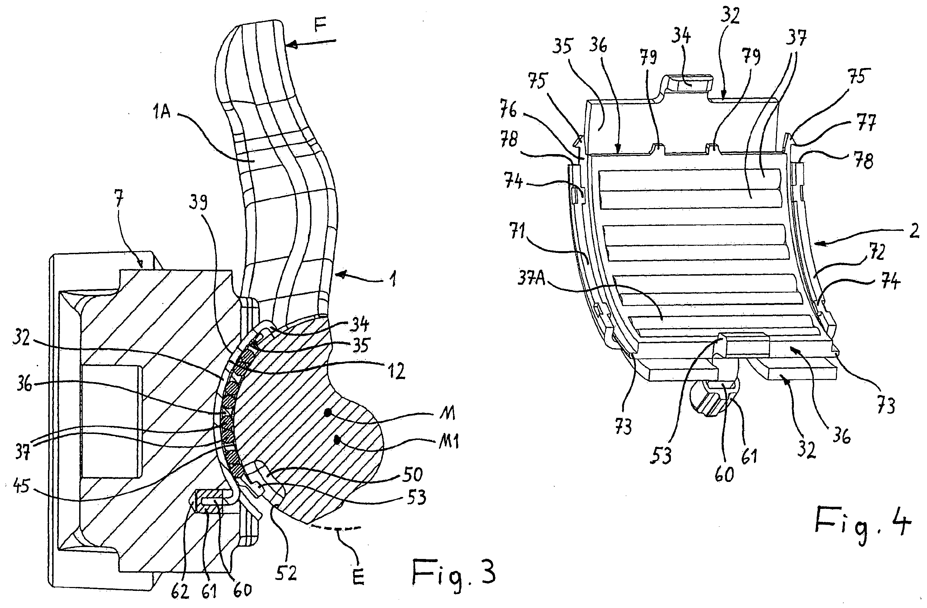

Die Reibkraft zwischen der Bremsscheibe und den Bremsbelägen und damit die Verzögerung des Fahrzeugs ist abhängig von der Zuspannkraft, die von einem an dem Bremssattel befestigten Bremszylinder, vorzugsweise einem druckluftbetätigtem Bremszylinder, erzeugt wird. Der hier nur anhand seiner Betätigungskraft F (Fig. 3) symbolisierte Bremszylinder arbeitet gegen das freie Ende eines Schwenkarms 1A, mit dem der Hebel 1 versehen ist.

Im Übrigen ist der Hebel 1, der auch als Zuspannhebel bezeichnet werden kann, gabelförmig gestaltet, indem zwar nur ein Schwenkarm 1A vorhanden ist, aber die Zuspannwelle des Hebels aus zwei axial zueinander beabstandeten Abschnitten 8A, 8B besteht. Zwischen diesen zwei Abschnitten 8A, 8B befindet sich, auf derselben Mittellinie wie der Schwenkarm 1A angeordnet, ein Freiraum 9. Der Freiraum 9 befindet sich in Verlängerung zu dem in dem Druckstück 7 ausgebildeten Innengewinde 6, in welches das Nachstellelement der Nachstellung eingreift.

Mit der Rückseite der aus zwei Abschnitten bestehenden Zuspannwelle ist der Hebel 1 mittels eines nicht dargestellten Schwenklagers gegen den Bremssattel abgestützt. Bei Betätigung des Bremszylinders schwenkt der Hebel 1 um dieses Schwenklager in Richtung zu der Bremsscheibe. Diese Schwenkbewegung führt, indem gemäß Fig. 3 die Drehachse M der Lagerung des Hebels 1 am Druckstück 7 exzentrisch zu der Drehachse M1 jenes Schwenklagers angeordnet ist, über das der Hebel 1 gegen den Bremssattel abgestützt ist, zu einem Vortreiben des Druckstücks 7 in Richtung zur Bremsscheibe.

Die Lagerung des Hebels 1 am Druckstück 7 ist aufgeteilt auf die beiden Abschnitte 8A, 8B der Zuspannwelle. Auf jeder Seite des mittig in dem Hebel 1 ausgebildeten Freiraums 9 ist also jeweils ein als Wälzlager ausgebildetes Schwenklager 2 für die Schwenklagerung des Hebels 1 gegenüber dem Druckstück 7 angeordnet. Zu diesem Zweck ist der Hebel 1 auf jedem der beiden Abschnitte 8A, 8B, dem Druckstück 7 zugewandt, mit jeweils einer konvex gekrümmten Druckfläche 11 versehen. Jede Druckfläche 11 ist teilzylindrisch bzw. teilkreisförmig mit Bezug auf die Drehachse M.

Entsprechend weist das gegenüberliegende Druckstück 7 zwei konkav gekrümmte Druckflächen 12 in Schalenform auf. Auch die Druckflächen 12 sind teilzylindrisch bzw. teilkreisförmig mit Bezug auf die Drehachse M.

Zwischen den so paarweise vorhandenen Druckflächen 11, 12 am Hebel 1 und am Druckstück 7 befindet sich jeweils eine schalenförmige Wälzlagerung. Deren Drehachse M ist gegenüber der Drehachse M1 des Schwenklagers versetzt, über das der Hebel 1 zur Aufnahme der Reaktionskräfte rückseitig gegen den Bremssattel abgestützt ist. Durch die Exzentrizität zwischen den beiden Schwenk- bzw. Drehachsen M, M1 kommt es beim Verschwenken des Hebels 1 zu einer Vorverlagerung der Druckflächen 11 des Hebels 1 in Richtung zum Druckstück 7, und damit zu dem gewünschten Vorschub und der Zuspannung des Druckstücks 7 in Richtung zur Bremsscheibe.

Zu jedem der beiden Schwenklager, die identisch gestaltet sind, gehören jeweils eine druckstückseitige Wälzbahn 35, eine hebelseitige Wälzbahn 45, und dazwischen ein teilkreisförmig gekrümmter Lagerraum, in dem ein einzelner Lagerkäfig 36 mit darin drehgelagerten Wälzkörpern 37 Platz findet. Die Wälzkörper 37 sind längliche Zylinderrollen, die zugleich an beiden Wälzbahnen 35, 45 abrollen, und sich über den größten Teil der Breite des Lagerkäfigs 36 erstrecken. Der Lagerkäfig 36 besteht vorzugsweise aus Kunststoff.

Die druckstückseitige Wälzbahn 35 ist an der konkav gestalteten Innenseite einer gebogenen Lagerschale 32 ausgebildet. Mit ihrer konvex gestalteten Außenseite 39 ist die gebogene Lagerschale 32 gegen die Druckfläche 12 an dem Druckstück 7 abgestützt. Die Lagerschale 32 besteht vorzugsweise aus Metallblech.

An dem dem Schwenkarm 1A zugewandten Ende der äußeren Lagerschale 32 ist an dieser ein radialer Vorsprung 34 angeformt. Dieser Vorsprung 34 bildet einen die Beweglichkeit des Lagerkäfigs 36 in die eine Umfangsrichtung begrenzenden Anschlag. Der Lagerkäfig 36 mit den Wälzkörpern 37 kann sich daher nur soweit in die eine Umfangsrichtung bewegen, bis er gegen diesen Anschlag 34 stößt. Es besteht daher keine Gefahr, dass sich der Lagerkäfig 36 soweit in diese Umfangsrichtung, nämlich zu dem Schwenkarm 1A hin, bewegt, dass er und die äußere Lagerschale 32 auseinanderfallen.

Auch in die andere Umfangsrichtung, nämlich in die von dem Schwenkarm 1A abgewandte Richtung, ist die Beweglichkeit des Lagerkäfigs 36 durch einen Anschlag begrenzt. Hierzu befindet sich in der hebelseitigen Wälzbahn 45, welche bei den Figuren 1 - 3 durch die direkt am Hebel 1 durch eine Schleifbearbeitung der Abschnitte 8A, 8B ausgebildete Druckfläche 11 gebildet wird, eine Öffnung in der Gestalt einer Tasche 50. Bei der Tasche 50 handelt es sich um eine Materialausnehmung in der konvex gekrümmten Druckfläche 11, welche die hebelseitige Wälzbahn 45 für die Wälzkörper bildet.

Die Öffnung in Gestalt der Tasche 50 erstreckt sich nur über einen kleinen Teil der Gesamtlänge der gekrümmt verlaufenden Wälzbahn 45. Sie erstreckt sich auch nur über einen Teil der Breite der Wälzbahn 45, so dass zu beiden Seiten der Tasche 50 Wälzbahnbereiche zum Abrollen von Wälzkörpern 37 verbleiben.

Die Tasche 50 bildet dort, wo ihre Wandung an die teilzylindrisch verlaufende Krümmungsebene E der Wälzbahn 45 stößt, eine Anschlagkante 52. Auch diese Anschlagkante 52 bildet einen Anschlag, denn sie begrenzt die Beweglichkeit des Lagerkäfigs 36 in von dem Schwenkarm 1A abgewandter Umfangsrichtung.

Der Gegenanschlag zu der Anschlagkante 52 befindet sich an dem Lagerkäfig 36. Zu diesem Zweck ist an dem einen Ende des Lagerkäfigs 36, der Anschlagkante 52 in Umfangsrichtung gegenüberliegend, ein Vorsprung 53 ausgebildet. Der Vorsprung 53 erstreckt sich nach radial innen bis über die gekrümmte Ebene E hinaus, in der sich die Wälzbahn 45 befindet, und er erstreckt sich bis in die Tasche 50.

Sofern der Lagerkäfig 36 aus Kunststoff besteht, ist der Vorsprung 53 einstückig an dem Ende des Lagerkäfigs angeformt.

Fig. 3 lässt erkennen, dass die in Umfangsrichtung betrachtete Länge des Vorsprungs 53 deutlich geringer ist, als die in Umfangsrichtung betrachtete Länge der Tasche 50. Die Breite des Vorsprungs 53 ist etwas geringer, als die Breite der Tasche 50.

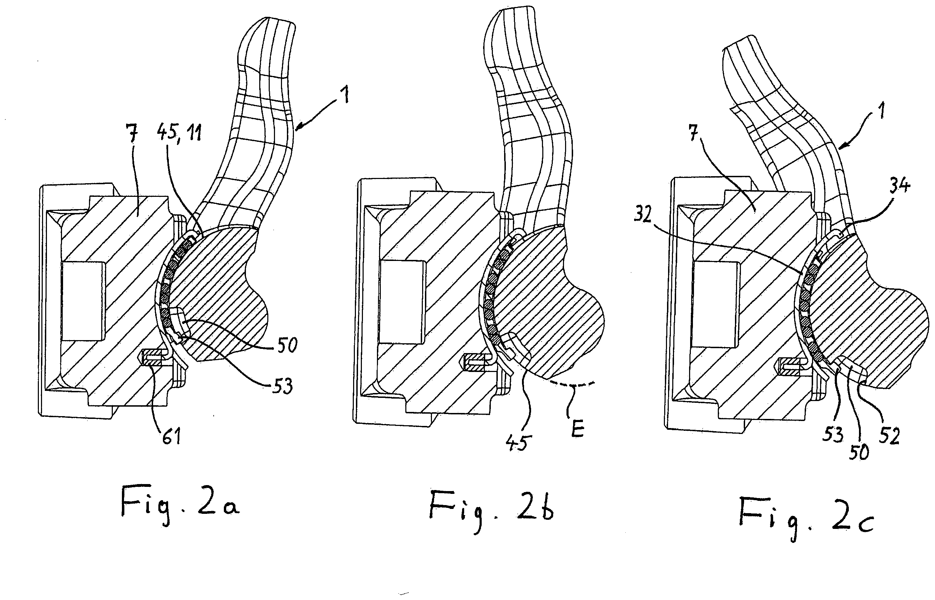

Die Wirkung der beiden die Beweglichkeit des Lagerkäfigs 36 begrenzenden Anschläge zeigen die Figuren 2a - 2c. Diese zeigen den Schwenkhebel 1 in jeweils verschiedenen Stellungen. In Fig. 2a befindet sich der Schwenkhebel 1 in seiner Ausgangslage bei unbetätigter Bremse. Die Fig. 2b zeigt den Hebel in einer Position die dieser einnimmt, wenn die Bremsbeläge nach Überwindung des Lüftspiels in Kontakt zu der Bremsscheibe kommen. Die Fig. 2c zeigt den Hebel bei maximaler Zuspannung und voller Bremskraft.

In der Normalposition des Hebels nach Fig. 2a erfolgt die Grundpositionierung des Lagerkäfigs 36. Dieser ist zwischen den beiden Anschlägen, also einerseits dem Vorsprung 34 an der Lagerschale 32, und andererseits der Anschlagkante 52 an dem Hebel 1, so positioniert, dass dem Lagerkäfig 36 keine nennenswerte Bewegung möglich ist. Je weiter der Hebel 1 bei seiner Betätigung verschwenkt, desto mehr wandert der Käfig durch das Abrollen der Wälzkörper 37, und desto mehr vergrößern sich die Abstände zu den beiden Anschlägen. Daher sollte in Umfangsrichtung die Länge des Vorsprungs 53 geringer sein, als die Länge der Tasche 50, in die der Vorsprung 53 eintaucht und in der er sich bewegen kann. Bei der Situation nach Fig. 2c kommt es, anders als dargestellt, möglichst zu keinem Kontakt zwischen dem Vorsprung 53 und der Wandung der Tasche 50.

Die Tasche 50 befindet sich auf jenem Umfangsabschnitt der hebelseitigen Wälzbahn 45, der am weitesten von dem Schwenkarm 1A entfernt liegt, vorzugsweise auf dem letzten Viertel der Wälzbahn 45. Denn in der in Fig. 2c wiedergegebenen Situation maximaler Zuspannkraft sind die in dem Lagerkäfig 36 zusammengefassten Wälzkörper 37 soweit auf der hebelseitigen Wälzbahn 45 gewandert, dass sich kein Wälzkörper 37 mehr auf jenem Längsabschnitt der Wälzbahn 45 befindet, auf dem die Tasche 50 angeordnet ist. Bei maximalen Kräften steht daher für alle Wälzkörper 37 die volle Breite der Wälzbahn 45 zur Abstützung zur Verfügung. Zu Beginn der Zuspannung hingegen, wie in Fig. 2a dargestellt, rollen einige Wälzkörper 37 noch auf jenem Längsabschnitt der Wälzbahn 45 ab, auf dem sich die Tasche 50 befindet. Da sich die Tasche in der Mitte der Wälzbahnbreite befindet, stützen sich diese Wälzkörper 37 dann nur zu beiden Seiten der Tasche 50 ab, und nicht in der Mitte. Wegen der in dieser Situation nur geringen Wälzlagerkräfte ist dies nicht von Nachteil.

Da die Bestimmung der Tasche 50 die Bereitstellung der weiteren Anschlagkante 52 für den Lagerkäfig ist, reicht eine geringe Breite der Tasche 50 aus. Je geringer diese Breite ist, desto mehr Breite steht als Aufstands- und Abrollfläche für die Wälzkörper 37 zur Verfügung, die sich allesamt über die volle Breite der Wälzbahn 45 erstrecken. Vorzugsweise beträgt die Breite der Tasche 50 nicht mehr als ein Drittel der Aufstandsbreite der Wälzkörper 37 auf der Wälzbahn 45.

Bei der hier beschriebenen Ausführungsform ist die Tasche 50 innerhalb der Wälzbahn 45 angeordnet, d. h. Tasche 50 ist allseitig von der Wälzbahn 45 umgeben. Je nach Hebelgeometrie lässt sich jedoch auch bereits mit einer Tasche 50, die in Umfangsrichtung nur teilweise in die Wälzbahn 45 hinein reicht, jener zweite Anschlag 52 realisieren, welcher die Beweglichkeit des Lagerkäfigs 36 in die zweite Umfangsrichtung begrenzt. Auch in diesem Fall befindet sich die Anschlagkante 52 dort, wo die Wandung der Tasche 50 auf jene Krümmungsebene E stößt, in der sich die Wälzbahn 45 befindet.

Ist der Hebel 1 einschließlich seines Schwenkarms 1A ein durch Schmieden gefertigtes Bauteil, so ist auch die Tasche 50 Ergebnis des Schmiedeprozesses. Es ist nicht erforderlich, die Tasche 50 und insbesondere die daran im Übergang zu der Krümmungsebene E der Wälzbahn 45 ausgebildete Anschlagkante 52 eigenen Bearbeitungsschritten zu unterziehen, sofern die Wälzbahn 45 hochgenau bearbeitet ist, etwa durch eine Schleifbearbeitung des Schmiedeteils im Bereich der Wälzbahnen 45.

Für die Befestigung der jeweiligen Lagerschale 32 an dem Druckstück 7 ist jede Lagerschale 32 über einen nach außen ragenden Verankerungszapfen 60 in dem Druckstück 7 verdübelt. Der Verankerungszapfen 60 ist von rechteckigem Querschnitt mit zwei längeren und zwei kürzeren Seiten, und sitzt in einer im Wesentlichen ebenfalls rechteckigen Öffnung eines Dübels 61, der seinerseits in einer Bohrung 62 (Fig. 1) in dem Druckstück 7 sitzt.

Die Fig. 4 zeigt, passend für jedes der beiden Wälzlager 2, das fertigmontierte Schalenlager vor der abschließenden Befestigung an der muldenförmigen Fläche 12 des Druckstücks 7. Beide Schalenlager sind identisch gestaltet, es kann daher nicht zu einem versehentlichen Vertauschen kommen.

Die gegen das Druckstück 7 abgestützte Lagerschale 32 ist an beiden Längsrändern mit radial nach innen gerichteten Seitenwänden 71, 72 versehen. Zwischen den Seitenwänden 71, 72 befindet sich der Lagerkäfig 36, der daher durch die Seitenwände 71, 72 seitlich geführt ist. An beiden Seitenwänden 71, 72 sind Vorsprünge 74 von solcher Breite ausgebildet, dass sich die Vorsprünge 74 bis über Längsränder 73 des Lagerkäfigs 36 erstrecken, wodurch die Vorsprünge 74 den Lagerkäfig 36 in radialer Richtung in der Lagerschale 32 verriegeln. Der Lagerkäfig 36 kann sich daher nicht radial aus der Lagerschale 32 lösen. Bei den Vorsprüngen 74 handelt es sich z. B. um örtliche Materialverformungen der Ränder der Seitenwände 71, 72.

Für die Kompaktheit des in Fig. 4 dargestellten Schwenklagers ist es von Vorteil, dass der Lagerkäfig 36 an seinen beiden Längsrändern 73 flacher ist, als in seinem die Wälzkörper 37 zusammenfassenden Mittelbereich. Diese Ausgestaltung ermöglicht an der Lagerschale 32 kurze Seitenwände 71, 72, also Seitenwände 71, 72 von geringer radialer Erstreckung.

Die Seitenwände 71, 72 sind insbesondere so kurz, dass sie sich radial weniger weit erstrecken, als die zylindrischen Mantelflächen 37A (Fig. 4) der Wälzkörper 37. Auf diese Weise reichen die Seitenwände 71, 72 bei fertig montierter Lagerung nicht bis an die Krümmungsebene E der hebelseitigen Wälzbahn 45 heran. Die maximale Breite der Wälzbahn 45 unterliegt daher keinen Beschränkungen, wodurch sich die Kosten für die Herstellung des Hebels 1 reduzieren lassen. Ein weiterer Vorteil besteht in den geringen Anforderungen an die Genauigkeit der gegenseitigen axiale Position der Lagerschale 32 einerseits und der hebelseitigen Wälzbahn 45 andererseits, was ebenfalls zu Montagevorteilen sowie zu günstigen Kosten bei der Herstellung führt.

Für eine in Umfangsrichtung untrennbare Anordnung von Lagerschale und Lagerkäfig, was während des Transports und bei der Montage des Schalenlagers von großem Vorteil ist, ist bei der Ausführungsform nach den Figuren 1 - 4 der Lagerkäfig 36 an seinem - nach der Montage - dem Schwenkarm 1A zugewandten Ende an jedem seiner Längsränder 73 mit einem Arretierelement 75 versehen. Das Arretierelement 75 setzt sich zusammen aus einem sich in Umfangsrichtung erstreckenden, schlanken und daher seitlich federnd nachgiebigen Abschnitt 76, an dessen Ende sich ein Verriegelungsvorsprung 77 befindet. An dem Verriegelungsvorspruch ist nach seitlich außen eine Sperrnase sowie eine Einführschräge ausgebildet, wodurch jedes Arretierelement 75 insgesamt die Gestalt einer Speerspitze aufweist.

An den Verriegelungsvorsprüngen 77 ist der Lagerkäfig 36 breiter, als auf seiner übrigen Länge. Wird der Lagerkäfig 36 in Umfangsrichtung in die Lagerschale 32 hineingeschoben, können die Verriegelungsvorsprünge 77 durch Kontakt der Einführschrägen elastisch nach innen ausweichen, und sodann an den Innenseiten der Seitenwände 71, 72 entlang gleiten. Hinter den Enden der Seitenwände 71, 72 können die Verriegelungsvorsprünge 77, wegen ihrer Anordnung an den nachgiebigen Abschnitten 76, zurückfedern. Sie springen nach seitlich außen vor, wobei die Sperrnasen, da ihre Gesamtbreite größer ist als der Innenabstand zwischen den beiden Seitenwänden 71, 72, hinter den Enden der Seitenwände 71, 72 arretieren.

Ein Zurückbewegen des Lagerkäfigs 36 ist dann nicht mehr möglich. Dieser ist mittels seiner beiden Arretierelemente 75 in der in Fig. 4 wiedergegebenen Montageposition verriegelt. Lagerschale 32 und Lagerkäfig 36 können sich nicht voneinander lösen und lassen sich daher als Einheit an dem Druckstück 7 montieren, ohne hierbei eine erhöhte Sorgfalt aufwenden zu müssen.

Der verbleibende Bewegungsfreiraum des Lagerkäfigs 36 wird von dem Anschlag 34 und den Anschlagkanten 78 an den Enden der Seitenwände 71, 72 begrenzt. Der Bewegungsfreiraum ist etwas größer bemessen als die maximale Wälzbewegung bei einer Bremsung. Somit sind die Arretierelemente 75 im Einbauzustand der Einheit aus Lagerkäfig 36 und Lagerschale 32 funktionslos.

Zwei an dem Lagerkäfig 36 ausgebildete Nasen 79 sind mit dem Breitenmaß des Anschlags 34 beabstandet, so dass bei der Montage der Lagerkäfig 36 über einen Reibschluss zwischen den Innenseiten der Nasen 79 und den Außenflächen des Anschlags 34 in einer Ausgangslage relativ zu der Lagerschale 32 vorpositionierbar ist. Dabei ist der Reibschluss so gering, dass dieser im Betrieb kein nachteiliges Hindernis darstellt, dagegen aber für die Fixierung bis zur Montage in die Scheibenbremse groß genug ist.

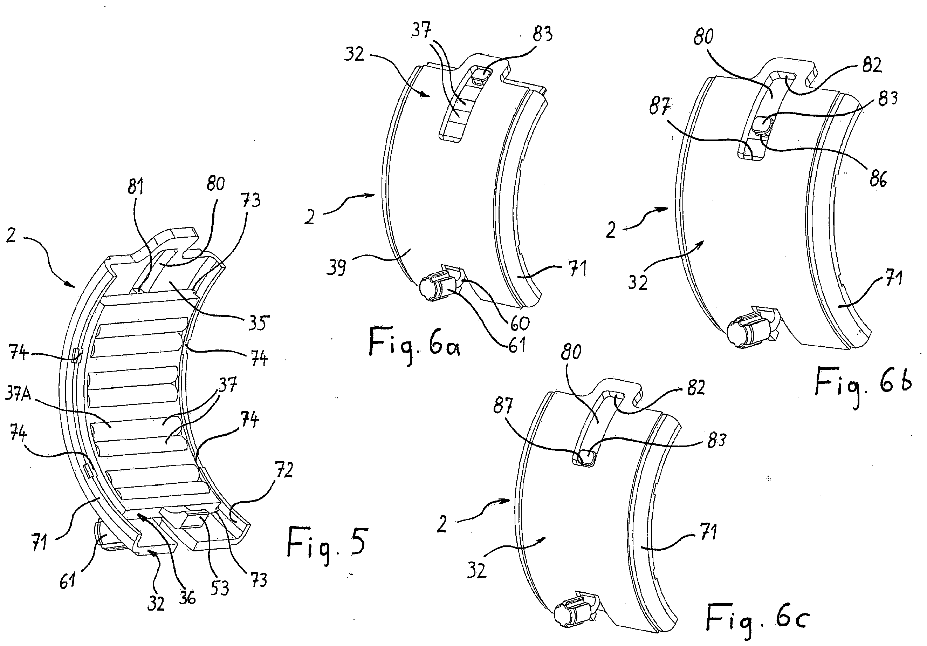

In den Figuren 5 und 6a - 6c ist eine zweite Ausführungsform des eine Baueinheit bildenden Schwenklagers 2 wiedergegeben, wobei für gleiche bzw. für gleichwirkende Teile dieselben Bezugszeichen verwendet werden, wie bei der Ausführungsform gemäß den Figuren 1 - 4.

Bei der zweiten Ausführungsform ist die Lagerschale 32 in der Wälzbahn 35 mit einem Langloch 80 versehen. Alternativ kann in der Wälzbahn 35 eine langlochförmige Ausnehmung ausgebildet sein, z. B. eine entsprechend gestaltete Vertiefung. In das Langloch 80 bzw. in die langlochförmige Ausnehmung hinein erstreckt sich ein Vorsprung 83, welcher an dem Ende des Lagerkäfigs 36 einstückig angeformt ist. Der Vorsprung 83 ist von solcher radialer Länge, dass er sich bis über die Wälzbahn 35 hinaus in das Langloch 80 hinein bzw. in eine dort angeordnete, langlochförmige Ausnehmung hinein erstreckt.

An dem Vorsprung 83 ist, dem Schwenkarm 1A des Hebels 1 zugewandt, ein Anschlag 81 ausgebildet. Mit diesem Anschlag 81 stößt der Vorsprung 83, bei einer Bewegung des Lagerkäfigs 36 in Richtung Schwenkarm 1A, gegen einen an der Lagerschale 32 ausgebildeten Anschlag 82. Als Anschlag 82 dient das dem Schwenkarm 1A nähere Ende des Langlochs 80.

Der Vorsprung 83 erstreckt sich radial nicht über die konvex gekrümmte Außenseite 39 der Lagerschale 32 hinaus, damit das Anliegen dieser Außenseite 39 an der Druckfläche 12 des Druckstücks 7 nicht beeinträchtigt ist.

Prinzipiell ist es möglich, dass sich an dem Vorsprung 83 noch ein weiterer Anschlag 86 (Fig. 6b) befindet, und dass dieser weitere Anschlag 86 die Beweglichkeit des Lagerkäfigs 36 in die andere Umfangsrichtung, also von dem Schwenkarm 1A weg, begrenzt. Diese Begrenzung tritt dann ein, wenn der weitere Anschlag 86 des Vorsprungs 83 gegen das entgegengesetzte Ende 87 des Langlochs 80 stößt, wie in Fig. 6c wiedergegeben.

Jedoch werden zur Begrenzung der Beweglichkeit des Lagerkäfigs 36 in diese andere Umfangsrichtung dieselben Maßnahmen wie bei dem Schwenklager nach der ersten Ausführungsform bevorzugt. In der hebelseitigen Wälzbahn 45 befindet sich daher die bereits beschriebene Tasche 50 mit der Anschlagkante 52. An dem Lagerkäfig 36 ist, der Anschlagkante 52 in Umfangsrichtung gegenüberliegend, der Vorsprung 53 ausgebildet (Fig. 5). Dieser erstreckt sich nach radial innen bis über jene gekrümmte Ebene E hinaus (Fig. 3), in der sich die Wälzbahn 45 befindet, und erstreckt sich bis in die Tasche 50.

Sofern der Lagerkäfig 36 gemäß der zweiten Ausführungsform aus Kunststoff besteht, sind sowohl der nach radial außen gerichtete Vorsprung 83, als auch der nach radial innen gerichtete Vorsprung 53 einstückig an dem Lagerkäfig angeformt. Dazu setzt sich der Lagerkäfig 36 in Umfangsrichtung aus einem Hauptabschnitt, auf dem die Wälzkörper 37 angeordnet sind, und zu den Enden hin aus Endabschnitten zusammen. Der Vorsprung 83 und der Vorsprung 53 sind jeweils an einem dieser Endabschnitte angeformt, so dass die Wälzkörper 37 nicht beeinträchtigt werden.

Ähnlich wie der Vorsprung 53 ist auch der Vorsprung 83 und damit auch das Langloch 80 von relativ geringer Breite. Die Breite des Vorsprungs 83 beträgt maximal ein Drittel der Breite des Lagerkäfigs 36.

Von Vorteil ist, wenn sich die Breite des Langlochs 80 über dessen Länge etwas ändert, wobei die geringste Breite gleich oder etwas geringer ist, als die Breite des in das Langloch 80 ragenden Vorsprungs 83. Denn auf diese Weise lässt sich, z. B. in der in Fig. 6a wiedergegebenen Position, der Lagerkäfig 36 durch Klemmen bzw. durch einen Reibschluss relativ zu der Lagerschale 32 vorpositionieren. Das Klemmen bzw. der Reibschluss ist so gering, dass sich im Betrieb kein nachteiliges Hindernis ergibt, wohingegen der Vorteil für die Vorpositionierung der Bestandteile des Schwenklagers bis zu dessen Montage in der Scheibenbremse groß ist.

Das Langloch 80 führt zwar zu einer Verkleinerung der für die äußere Wälzbahn 35 verbleibenden Fläche. Jedoch ist zu bedenken, dass sich das Langloch 80 auf jenem Umfangsabschnitt der Wälzbahn 35 befindet, der am nächsten an dem Schwenkarm 1A liegt, vorzugsweise auf dem letzten Viertel der Wälzbahn 35. Denn in der in Fig. 6c wiedergegebenen Situation maximaler Zuspannkraft sind die in dem Lagerkäfig 36 zusammengefassten Wälzkörper 37 soweit auf der Wälzbahn 35 gewandert, dass sich kein Wälzkörper 37 mehr auf jenem Längsabschnitt der Wälzbahn 35 befindet, auf dem das Langloch 80 angeordnet ist. Bei maximalen Kräften steht daher für alle Wälzkörper 37 die volle Breite der Wälzbahn 35 zur Abstützung zur Verfügung. Zu Beginn der Zuspannung hingegen, wie in Fig. 6a dargestellt, rollen einige Wälzkörper 37 noch auf jenem Längsabschnitt der Wälzbahn 35 ab, auf dem sich das Langloch 80 befindet. Da sich das Langloch in der Mitte der Wälzbahnbreite befindet, stützen sich diese Wälzkörper 37 dann nur zu beiden Seiten des Langlochs 80 ab, und nicht in der Mitte. Wegen der in dieser Situation nur geringen Wälzlagerkräfte ist dies nicht von Nachteil.

Das Einsetzen des mit den Wälzkörpern 37 bestückten Lagerkäfigs 36 in die umgebende Lagerschale 32 lässt sich vereinfachen, indem an dem Vorsprung 83 und / oder an der Innenseite der Lagerschale 32 Einführschrägen oder Einführrampen ausgebildet sind, nach deren Überwinden der Lagerkäfig in der Lagerschale 32 arretiert, so dass dann keine Gefahr des Auseinanderfallens der Teile 36, 32 mehr besteht. Ein damit einhergehendes, kurzzeitiges Verbiegen des Lagerkäfigs und / oder der Lagerschale 32 wird dabei in Kauf genommen, ist aber nicht nachteilig.

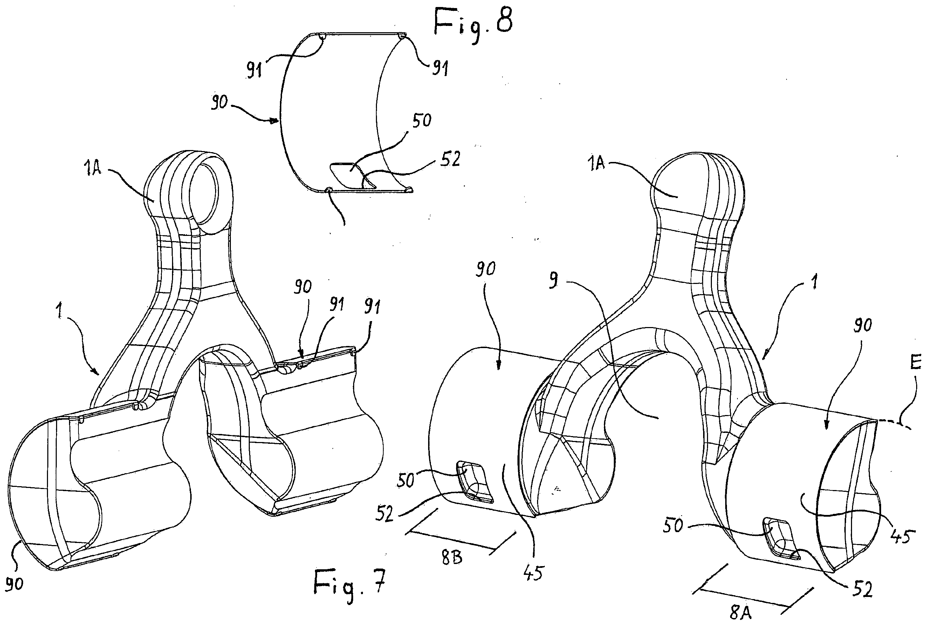

In den Figuren 7 und 8 ist eine andere Ausführungsform des Hebels 1 wiedergegeben. Ebenso wie bei den bereits beschriebenen Ausführungsformen ist der Hebel 1 einschließlich seines Schwenkarms 1A ein geschmiedetes Bauteil, wobei auch die im Hebel ausgebildete Tasche Ergebnis des Schmiedeprozesses ist. Bei dem Hebel nach Fig. 7 und Fig. 8 ist allerdings keine Schleifbearbeitung der zwei Wälzbahnen 45 erforderlich, da auf die betreffenden beiden Abschnitte 8A, 8B der Zuspannwelle Lagerschalen 90 aus Metallblech aufgeklipst sind.

Die Lagerschalen 90 haben die gleiche teilzylindrische Form, wie sie bei den bereits beschriebenen Ausführungsformen durch ein maschinelles Schleifen des Hebels 1 unter Erzielung der Druckflächen 11 bzw. Wälzbahnen 45 erreicht wird. Die teilzylindrische Außenseite jeder Lagerschale 90 bildet daher hier die Krümmungsebene E und die hebelseitige Wälzbahn 45.

Die Lagerschale 90 besteht aus verformtem und gestanztem Metallblech. Sie ist dort, wo sich dahinter die im Hebel 1 ausgebildete Tasche befindet, mit einer in der Wälzbahn 45 angeordneten oder in die Wälzbahn teilweise hinein reichenden Öffnung 50 versehen. Die Öffnung 50 erstreckt sich nur über einen Teil der Wälzbahnbreite und bildet im Übergang zu der außenseitigen Krümmungsebene E jene zweite Anschlagkante 52, welche die Beweglichkeit des Lagerkäfigs 36 in Umfangsrichtung begrenzt. Die unter der Öffnung 50 in dem Hebel 1 ausgebildete Tasche ist von mindestens gleicher Breite und Länge wie die Breite und Länge der Öffnung 50.

An den quer zur Umfangsrichtung angeordneten Rändern ist die Lagerschale 90 mit Abkantungen 91 versehen. Die Abkantungen sind hier in Gestalt von vier Befestigungslaschen 91, die den Hebel hintergreifen, so dass jede Lagerschale 90 unverdrehbar an dem Zuspannabschnitt 8A, 8B befestigt wird.

Die zwei Lagerschalen 90 sind identisch gestaltet. Sie können also nicht durch Vertauschen falsch montiert werden.

Jede der beiden Lagerschalen 90 ist aus einem flachen Blech hergestellt, und weist Abkantungen nur nach innen in Form der Befestigungslaschen 91 auf. Eventuell können zwecks Erhöhung der Stabilität der Lagerschale 90 dessen Seiten umgekantet sein, aber nur nach innen hin. Nach radial außen hingegen ist jede Lagerschale 90 ohne irgendwelche über die teilzylindrische Krümmungsebene E hinaus vorstehenden Elemente. Die dem Hebel 1 abgewandte Außenseite der Lagerschale 90 ist daher, abgesehen von ihrer Krümmung, gänzlich eben und ohne vorspringende oder vorstehende Teile.

Bei einer alternativen Ausführungsform ist zwar die Öffnung 50 in den Lagerschalen 90 vorhanden, jedoch befindet sich dahinter keine Tasche. Gleichwohl wird durch die Öffnung 50 dann der angestrebte zweite Begrenzungsanschlag erreicht, wenn das Blech, aus dem die Lagerschale 90 besteht, von solcher Materialdicke ist, dass der an dem Lagerkäfig 36 ausgebildete Vorsprung 53 nur in diese Öffnung 50 eintaucht und nicht in das Material des Hebels 1. In diesem Fall wird die Anschlagkante 52 durch den Übergang zwischen dem Rand der Öffnung 50 und der durch die Außenseite der Lagerschale 90 definierten Krümmungsebene E der Wälzbahn gebildet.

### Bezugszeichenliste

- 1: Hebel
- 1A: Schwenkarm
- 2: Wälzlager, Schwenklager
- 6: Innengewinde
- 7: Druckstück
- 8A: Abschnitt der Zuspannwelle
- 8B: Abschnitt der Zuspannwelle
- 9: Freiraum
- 11: Druckfläche
- 12: Druckfläche
- 32: Lagerschale
- 34: Vorsprung, Anschlag
- 35: Wälzbahn
- 36: Lagerkäfig
- 37: Wälzkörper
- 37A: Wälzkörper-Mantelfläche
- 39: Außenseite
- 45: Wälzbahn
- 50: Tasche oder Öffnung
- 52: Anschlagkante
- 53: Vorsprung
- 60: Verankerungszapfen
- 61: Dübel
- 62: Bohrung
- 71: Seitenwand
- 72: Seitenwand
- 73: Längsrand
- 74: Vorsprung
- 75: Arretierelement
- 76: nachgiebiger Abschnitt
- 77: Verriegelungsvorsprung
- 78: Anschlagkante
- 79: Nase
- 80: Langloch
- 81: Anschlag
- 82: Anschlag
- 83: Vorsprung
- 86: Anschlag
- 87: Ende Langloch
- 90: Lagerschale
- 91: Abkantung, Befestigungslasche

- E: Krümmungsebene
- F: Kraft
- M: Drehachse
- M1: Drehachse

## Patentansprüche

1. Schwenklager mit einer Lagerschale (32), an der eine teilzylindrisch gekrümmte Wälzbahn (35) ausgebildet ist, und mit an der Wälzbahn (35) abrollenden, in einem Lagerkäfig (36) zusammengefassten Wälzkörpern (37), wobei der Lagerkäfig (36) und die Lagerschale (32) in radialer Richtung gegeneinander verriegelt sind, und an dem Lagerkäfig (36) und an der Lagerschale (32) Anschläge (81, 82) angeordnet sind, welche die gegenseitige Beweglichkeit von Lagerkäfig (36) und Lagerschale (32) zumindest in die eine Umfangsrichtung begrenzen, wobei an dem Lagerkäfig (36) ein Vorsprung (83) ausgebildet ist, der sich radial bis über die Wälzbahn (35) hinaus erstreckt und an dem sich einer der Anschläge (81) befindet, wobei sich der Lagerkäfig (36) aus einem die Wälzkörper (37) aufnehmenden Mittelbereich und Längsrändern (73) zu beiden Seiten des Mittelbereichs zusammensetzt, und wobei sich die radiale Verriegelung an den Längsrändern (73) befindet, **dadurch gekennzeichnet, dass** die Lagerschale (32) in der Wälzbahn (35) mit einem Langloch (80) oder einer langlochförmigen Ausnehmung versehen ist, in welche(s) sich der Vorsprung (83) erstreckt, und dass sich der an der Lagerschale (32) angeordnete Anschlag (82) an dem einen Ende des Langlochs (80) bzw. der langlochförmigen Ausnehmung befindet.

2. Schwenklager nach Anspruch 1, **dadurch gekennzeichnet, dass** der Lagerkäfig (36) an den Längsrändern (73) flacher als in dem Mittelbereich gestaltet ist.

3. Schwenklager nach Anspruch 1 oder 2, **dadurch gekennzeichnet, dass** die Längsränder (73) innen an Seitenwänden (71, 72) der Lagerschale (32) geführt sind.

4. Schwenklager nach Anspruch 3, **dadurch gekennzeichnet, dass** die Seitenwände (71, 72) der Lagerschale (32) radial weniger weit reichen, als die zylindrischen Mantelflächen (37A) der Wälzkörper (37).

5. Schwenklager nach einem der vorangehenden Ansprüche, **dadurch gekennzeichnet, dass** die Lagerschale (32) eine konvex gekrümmte Außenseite (39) und eine konkav gekrümmte Innenseite aufweist, und dass die Wälzbahn (35) an der Innenseite ausgebildet ist.

6. Schwenklager nach Anspruch 1, **dadurch gekennzeichnet, dass** sich der Lagerkäfig (36) in Umfangsrichtung aus einem Hauptabschnitt, auf dem die Wälzkörper (37) angeordnet sind, und den Abschluss des Lagerkäfigs (36) bildenden Endabschnitten zusammensetzt, und dass der Vorsprung (83) an einem der Endabschnitte angeformt ist.

7. Schwenklager nach Anspruch 1, **dadurch gekennzeichnet, dass** sich an dem Vorsprung (83) ein weiterer Anschlag (86) befindet, und dass der weitere Anschlag (86) die Beweglichkeit des Lagerkäfigs (36) in die andere Umfangsrichtung begrenzt

8. Schwenklager nach einem der vorangehenden Ansprüche, **dadurch gekennzeichnet, dass** sich ein anderer an der Lagerschale (32) angeordneter Anschlag an dem anderen Ende (87) des Langlochs (80) bzw. der langlochförmigen Ausnehmung befindet.

9. Schwenklager nach Anspruch 1, **dadurch gekennzeichnet, dass** die Breite des Vorsprungs (83) geringer als die Breite des Lagerkäfigs (36) ist, vorzugsweise maximal ein Drittel der Breite des Lagerkäfigs (36).

10. Schwenklager nach Anspruch 8, **dadurch gekennzeichnet, dass** sich über die Länge des Langlochs (80) bzw. der langlochartigen Ausnehmung dessen / deren Breite ändert, wobei die geringste Breite gleich oder etwas geringer als die Breite des Vorsprungs (83) ist.

11. Schwenklager nach einem der vorangehenden Ansprüche, **gekennzeichnet durch** mit Reibschluss arbeitende Mittel (80, 83) zur Vorpositionierung des Lagerkäfigs (36) relativ zu der Lagerschale (32).

## Claims

1. Pivot bearing with a bearing shell (32), on which a partially cylindrically curved track (35) is formed, and with rolling elements (37) which roll on the track and are held together in a bearing cage (36), wherein the bearing cage (36) and the bearing shell (32) are locked in the radial direction with respect to one another, and on the bearing cage (36) and on the bearing shell (32) stops (81, 82) are arranged which limit the reciprocal mobility of the bearing cage (36) and the bearing shell (32) at least in one circumferential direction, wherein on the bearing cage (36) a projection (83) is formed which extends radially beyond the track (35) and on which one of the stops (81) is located, wherein the bearing cage (36) is made up of a central region accommodating the rolling elements (37) and long edges (73) on both sides of the central region, and wherein the radial lock is located on the long edges (73), **characterised in that** the bearing shell (32) is provided in the track (35) with a slot (80) or a slot-shaped recess into which the projection (83) extends, and **in that** the stop (82) arranged on the bearing shell (32) is located on one end of the slot (80) or the slot-shaped recess.

2. Pivot bearing according to claim 1, **characterised in that** the bearing cage (36) is flatter on the long edges (73) than in the central region.

3. Pivot bearing according to claim 1 or 2, **characterised in that** the long edges (73) are guided internally on side walls (71, 72) of the bearing shell (32).

4. Pivot bearing according to claim 3, **characterised in that** the side walls (71, 72) of the bearing shell (37) extend less far than the cylindrical surface areas (37A) of the rolling elements (37).

5. Pivot bearing according to one of the preceding claims, **characterised in that** the bearing shell (32) has a convexly curved outer face (39) and a concavely curved inner face, and **in that** the track (35) is formed on the inner face.

6. Pivot bearing according to claim 1, **characterised in that** in the circumferential direction the bearing cage (36) is made up of a main portion, on which the rolling elements (37) are arranged, and end portions which form the closure of the bearing cage (36), and **in that** the projection (83) is formed on one of the end portions.

7. Pivot bearing according to claim 1, **characterised in that** a further stop (86) is located on the projection (83), and **in that** the further stop (86) limits the mobility of the bearing cage (36) in the other circumferential direction.

8. Pivot bearing according to one of the proceeding claims, **characterised in that** another stop arranged on the bearing shell (32) is located on the other end (87) of the slot (80) or the slot-shaped recess.

9. Pivot bearing according to claim 1, **characterised in that** the width of the projection (83) is smaller than the width of the bearing cage (36), preferably at most a third of the width of the bearing cage (36).

10. Pivot bearing according to claim 8, **characterised in that** the width of the slot (80) or recess changes over the length thereof, wherein the smallest width is equal to or somewhat less than the width of the projection (83).

11. Pivot bearing according to one of the preceding claims, **characterised by** means (80, 83) operating with frictional locking for pre-positioning of the bearing cage (36) relative to the bearing shell (32).

## Revendications

1. Pivot, avec un coussinet de palier (32) sur lequel est constituée une voie de roulement (35) courbée de forme partiellement cylindrique, et avec des corps de roulement (37) roulant sur la voie de roulement (35) et rassemblés dans une cage de roulement (36), la cage de roulement (36) et le coussinet de palier (32) étant verrouillés l'un par rapport à l'autre dans la direction radiale, et des butées (81, 82) étant disposées sur la cage de roulement (36) et sur le coussinet de palier (32) et limitant la mobilité relative de la cage de roulement (36) et du coussinet de palier (32) au moins dans une direction circonférentielle, une saillie (83) qui s'étend radialement jusqu'au-delà de la voie de roulement (35) et sur laquelle se trouve une des butées (81) s'étendant sur la cage de roulement (36), la cage de roulement (36) se composant d'une zone centrale logeant les corps de roulement (37), et de bords longitudinaux (73) des deux côtés de la zone centrale, et le verrouillage radial se trouvant sur les bords longitudinaux (73), **caractérisé en ce que**, dans la voie de roulement (35), le coussinet de palier (32) est muni d'un trou oblong (80) ou d'un creux en forme de trou oblong dans lequel s'étend la saillie (83), et **en ce que** la butée (82) disposée sur le coussinet de palier (32) se trouve à une extrémité du trou oblong (80) ou respectivement du creux en forme de trou oblong.

2. Pivot selon la revendication 1, **caractérisé en ce que** la cage de roulement (36) est formée de façon plus plate sur les bords longitudinaux (73) que dans la zone centrale.

3. Pivot selon la revendication 1 ou 2, **caractérisé en ce que** les bords longitudinaux (73) sont guidés intérieurement sur des parois latérales (71, 72) du coussinet de palier (32).

4. Pivot selon la revendication 3, **caractérisé en ce que** les parois latérales (71, 72) du coussinet de palier (32) s'étendent radialement moins loin que les surfaces d'enveloppe (37A) cylindriques des corps de roulement (37).

5. Pivot selon l'une des revendications précédentes, **caractérisé en ce que** le coussinet de palier (32) présente un côté extérieur (39) courbé de façon convexe et un côté intérieur courbé de façon concave, et **en ce que** la voie de roulement (35) est constituée sur le côté intérieur.

6. Pivot selon la revendication 1, **caractérisé en ce que** la cage de roulement (36) se compose dans la direction circonférentielle d'un tronçon principal sur lequel sont disposés les corps de roulement (37), et de tronçons d'extrémité formant la terminaison de la cage de roulement (36), et **en ce que** la saillie (83) est formée sur un des tronçons d'extrémité.

7. Pivot selon la revendication 1, **caractérisé en ce qu'**une butée (86) supplémentaire se trouve sur la saillie (83), et **en ce que** la butée (86) supplémentaire limite la mobilité de la cage de roulement (36) dans l'autre direction circonférentielle.

8. Pivot selon l'une des revendications précédentes, **caractérisé en ce qu'**une autre butée disposée sur le coussinet de palier (32) se trouve à l'autre extrémité (87) du trou oblong (80) ou respectivement du creux en forme de trou oblong.

9. Pivot selon la revendication 1, **caractérisé en ce que** la largeur de la saillie (83) est plus faible que la largeur de la cage de roulement (36), est de préférence au maximum égale à un tiers de la largeur de la cage de roulement (36).

10. Pivot selon la revendication 8, **caractérisé en ce que**, sur la longueur du trou oblong (80) ou respectivement du creux en forme de trou oblong, la largeur du trou/du creux varie, la largeur la plus faible étant égale ou légèrement inférieure à la largeur de la saillie (83).

11. Pivot selon l'une des revendications précédentes, **caractérisé par** des moyens (80, 83) travaillant par liaison par friction pour le pré-positionnement de la cage de roulement (36) par rapport au coussinet de palier (32).
